# EUROPÄISCHE PATENTSCHRIFT

(11) **EP 0 962 148 B1**
(45) Veröffentlichungstag und Bekanntmachung des Hinweises auf die Patenterteilung: **10.12.2003**
(21) Anmeldenummer: 99110387.0
(22) Anmeldetag: 28.05.1999
(51) Int. Cl.: A22C 13/00

(54) **Von einem Netz umgebene, schlauchförmige Hülle für ein pastöses Füllgut**
Netted tubular casing for a pasty filling material
Enveloppe tubulaire entourée d'un filet pour une matière de remplissage pâteuse

(30) Priorität: 04.06.1998 DE 19824968
(43) Veröffentlichungstag der Anmeldung: 08.12.1999
(73) Patentinhaber: Kalle Nalo GmbH & Co. KG, 65203 Wiesbaden (DE)
(72) Erfinder: Urban, Rudolf, 55270 Jungenheim (DE); Ahlers, Michael, Dr., 55122 Mainz (DE)
(74) Vertreter: Plate, Jürgen, Dr.

(56) Entgegenhaltungen:
- EP-A- 0 709 030
- EP-A- 0 820 698
- WO-A-92/19680
- DE-A- 1 632 103
- DE-A- 3 416 406
- DE-A- 3 907 951
- DE-A- 19 515 477
- US-A- 3 329 509

## Beschreibung

Die Erfindung betrifft eine von einem Netz umgebene, schlauchförmige Hülle für ein pastöses Füllgut.

Nahrungsmittel in einer schlauchförmigen mit einem Netz überzogenen Hülle, insbesondere Würste in einer Netzhülle, sind lange bekannt Durch das Netz bekommen die Nahrungsmittel ein besonders ansprechendes, rustikales Aussehen. Das Netz kann dabei mit der Hülle fest verklebt sein (DE-A 39 07 951 ). Das Verkleben des Netzes bedeutet jedoch einen zusätzlichen Arbeitsschritt und ist daher nachteilig. Für einen Netzüberzug sind femer nicht alle Hüllen gleichermaßen geeignet. Günstig sind allgemein Hüllen mit einer relativ hohe Dehnbarkeit.

Bekannt sind darüber hinaus Wursthüllen auf Basis von thermoplastischer Stärke (EP-A 709 030). Entsprechend dem Anwendungsbereich kann die thermoplastische Stärke dabei mit synthetischen Polymeren, insbesondere weichen und zähen Polyamiden, Polyestern, Polyolefinen, Ethylen/Acrylsäureethylester/Maleinsäureanhydrid-Copolymeren oder Polyvinylpyrrolidonen, abgemischt sein. Hüllen mit verbesserter Wasserbeständigkeit werden erhalten, wenn ein Vemetzungsmittel zugesetzt wurde. Gleitmitteln können die Eigenschaften weiter modifizieren. Für die Anwendung "Brüh- und Kochwurst" enthält die Hülle gemäß der EP-A zusätzlich noch Fasern, die als Verstärkung wirken.

Es bestand daher die Aufgabe, eine Umhüllung für ein pastöses Füllgut zu schaffen, die aus einer - vorzugsweise nahtlosen - flexiblen Schlauchfolie und einem darüber liegenden Netz besteht. Dabei soll das Netz vor oder während des Füllens mit dem Füllgut (bevorzugt ein Wurstbrät) auf die Hülle aufgebracht werden, ohne daß eine feste Verbindung mit der Hülle vorhanden ist oder entsteht (mit Ausnahme des Clipverschlusses). Die Materialien der Umhüllung sollen aus natürlichen - möglichst nachwachsenden - Rohstoffen stammen und sich mit einfachen und umweltschonenden Verfahren verarbeiten lassen. Gleichzeitig soll die Hülle, möglichst auch das Netz, biologisch abbaubar oder mindestens kompostierbar sein. Die Nahrungsmittelhülle soll zudem ausreichend permeabel und für möglichst viele Wurstarten, insbesondere für Rohwürste (speziell Salami), verwendbar sein.

Gelöst wird die Aufgabe durch eine Hülle, die eine Mischung (Blend) aus thermoplastischer Stärke oder einem thermoplastischen Stärkederivat und einem oder mehreren synthetischen Polymeren umfaßt. Gegenstand der vorliegenden Anmeldung ist somit eine Umhüllung für ein pastöses Füllgut, bestehend aus einer flexiblen Schlauchfolie aus einem thermoplastischen Gemisch, wobei die Folie in einem Flächenverhältnis von 1 : 2 bis 1 : 10 blasverformt und von einem Netz umgeben ist, dadurch gekennzeichnet, daß das thermoplastische Gemisch a) thermoplastische Stärke und/oder ein thermoplastisches Stärkederivat und b) mindestens ein anderes, durch Polykondensation oder Polyaddition erhältliches Polymer umfaßt, wobei das Gewichtsverhältnis a) : b) im Bereich von 90 : 10 bis 10 : 90 liegt und die Hülle im nichtgewässerten Zustand eine Längs- bzw. Querdehnung von 200 bis 500 % aufweist.

Das thermoplastische Stärkederivat ist vorzugsweise ein Stärkeester, wie er in der DE-A 195 15 477 ausführlich beschrieben ist. Die Säurekomponente in dem Ester ist allgemein eine (C₂-C₁₀)Alkansäure, die vorzugsweise nicht oder nur wenig verzweigt ist. Ein besonders bevorzugtes und kostengünstiges Stärkealkanoat ist Stärkeacetat, insbesondere solches mit einem Substitutionsgrad von weniger als 3, speziell von 1,5 bis 2,4. Anders als die Stärke selbst sind Stärkeester, wie das Stärkeacetat, bereits als solche thermoplastisch und müssen nicht erst plastifiziert werden. Stärkeester mit einer längeren Alkylkette, beispielsweise Stärkehexanoate, -octanoate oder -decanoate, bewirken eine Veränderung der Geschmeidigkeit und Zähigkeit wie auch der Permeation der Nahrungsmittelhüllen. Durch Kombinieren verschiedener Stärkeester lassen sich Hüllen mit ganz speziellen Eigenschaften herstellen. Auch thermoplastische Stärkederivate, die kationische quarternäre Seitengruppen mit hydrophoben (C₂-C₁₈)Alkylgruppen, vorzugsweise (C₂-C₁₂)Alkylgruppen, aufweisen, sind geeignet. Ferner sind Stärkeether, z. B. Hydroxyethyl- oder Hydroxypropyl-Stärke, sowie Stärke-carbamate verwendbar.

Das durch Polykondensation erhältliche Polymer ist vorzugsweise ein Homooder Copolymer mit Hydroxycarbonsäure-Einheiten. Besonders bevorzugt ist es ein Polylactid, Poly(3-hydroxy-propionsäure), Poly(3-hydroxy-buttersäure), Poly(4-hydroxy-buttersäure), Polycaprolacton, Polyesteramide, Polyesterurethane, Polyether-urethane und Polyester-ether-urethane, Polyalkylencarbonate der Formel -[CHR¹-CHR²-O-CO-O-]ₙ, wobei R¹ und R² unabhängig voneinander für ein Wasserstoffatom oder einen (C₁-C₄)Alkylrest stehen und n eine ganze Zahl von 10 bis 5.000 ist. Besonders geeignete Polyalkylencarbonate sind Polyethylencarbonat (R¹ = R² = H) und Polypropylencarbonat sowie Gemische davon. Die Polyalkylencarbonate sind beispielsweise in der WO 96/35746 beschrieben. Ein bevorzugtes Polymer, das durch Polyaddition erhältlich ist, stellt Polyvinylacetat dar. Die Polykondensations- oder Polyadditionsprodukte lassen sich nach bekannten Verfahren synthetisch herstellen. Sie sind üblicherweise nicht oder nur sehr gering vemetzt. Ihr mittleres Molekulargewicht M_{w} beträgt allgemein 20.000 bis 2.000.000, bevorzugt 100.000 bis 1.000.000. Es wird angenommen, daß die Polykondensate eine Art von Matrix bilden, in der sich die thermoplastische und damit destrukturierte Stärke bzw. das Stärkederivat gleichmäßig verteilt.

In einer besonders bevorzugten Ausführungsform ist das durch Polykondensation erhältliche Polymer ein thermoplastisches Polyester-urethan. Es besteht vorzugsweise aus harten Polyurethan- und weichen Polyester-Segmenten, wobei die Segmente allgemein in alternierender Reihenfolge angeordnet sind. Als "weich" werden dabei Segmente mit einer Glas-Übergangstemperatur T_{g} von - 20 °C oder darunter bezeichnet, als "hart" dagegen solche mit einer Glas-Übergangstemperatur von + 30 °C oder darüber. Das Polyesterurethan kann aliphatischer oder aromatischer Natur sein. Der Anteil der Polyestersegmente in dem thermoplastischen Polyester-urethan beträgt 10 bis 90 Gew.-%, bevorzugt 20 bis 50 Gew.-%, jeweils bezogen auf das Gesamtgewicht des Polyesterurethans. Diese Segmente bestehen allgemein als Diisocyanat- und Diol-Einheiten. Die Diisocyanat-Einheiten können dabei aliphatisch, cycloaliphatisch oder aromatisch sein. Beispiele für aliphatische Diisocyanate sind Butan-1,4-diisocyanat und Hexan-1,6-diisocyanat. Isophoron-diisocyanat (= 3-Isocyanatomethyl-3,5,5-trimethyl-cyclohexan-isocyanat) repräsentiert ein cycloaliphatisches Isocyanat. Toluol-2,4- und -2,6-diisocyanat, Diphenylmethan-2,2'-, - 2,4'-, -2,6'- und -4,4'-diisocyanat sowie Naphthalin-1,5-diisocyanat sind bevorzugte aromatische Diisocyanate.

Die Polyestersegmente haben in der Regel eine mittlere Molmasse M_{w} von 500 bis 10.000 g/mol, bevorzugt 1.000 bis 4.000 g/mol. Sie bestehen bevorzugt aus Einheiten von zwei- oder mehrwertigen Alkoholen und Einheiten von zwei- oder mehrwertigen Carbonsäuren. Sie lassen sich aus den genannten Ausgangsstoffen durch Kondensationspolymerisation in Gegenwart von Katalysatoren, wie Titanbutylat (= Orthotitansäure-tetrabutylester) herstellen. Gewöhnlich bestehen sie jedoch aus Diol- und Dicarbonsäure-Einheiten. In die Kondensationsreaktion können anstelle der freien Säuren naturgemäß auch entsprechende Säurederivate, wie Carbonylhalogenide (insbesondere Carbonylchloride), Carbonsäureanhydride oder Carbonsäure-(C₁-C₄)alkylester eingesetzt werden. Die Diole oder Polyole haben allgemein ein aliphatisches oder cycloaliphatisches Grundgerüst. Bevorzugte Diole zur Herstellung der Estersegmente sind Ethan-1,2-diol (= Ethylenglykol), Propan-1,2- und -1,3-diol, 2,2-Dimethyl-propan-1,3-diol (= Neopentylglykol), Butan-1,4-diol, Pentan-1,5-diol, Hexan-1,6-diol und Cyclohexandiyl-bismethanol (insbesondere Cyclohexan-1,4-diyl-bismethanol). Es können auch Gemische von mehreren verschiedenen Diolen oder Polyolen eingesetzt werden. Die Di- oder Polycarbonsäuren haben bevorzugt ebenfalls ein aliphatisches oder cycloaliphatisches Grundgerüst, wobei aliphatische Dicarbonsäuren (wie Bernsteinsäure oder Adipinsäure) bevorzugt sind. Besonders bevorzugt ist Adipinsäure. Eine Dicarbonsäure mit einem cycloaliphatischen Grundgerüst ist beispielsweise Cyclohexandicarbonsäure (insbesondere Cyclohexan-1,4-dicarbonsäure). Die Polyestersegmente können auch aus Einheiten von Hydroxycarbonsäuren oder deren Derivaten aufgebaut sein, beispielsweise aus 3-Hydroxy-propionsäure, 3-Hydroxy-buttersäure, 4-Hydroxy-buttersäure, 5-Hydroxy-pentansäure oder ε-Caprolacton. Besonders geeignet sind Polyesterurethane, die bei einer Temperatur von 190 °C und einer Belastung von 21,6 kg einen Volumenschmelzindex MVI (bestimmt gemäß ISO 01133) im Bereich von etwa 5 bis 15 cm³/10 min aufweisen. In der nicht vorveröffentlichten DE-A 198 22 979 sind solche nahtlosen, schlauchförmigen Hüllen beschrieben, die mit einer Mischung von thermoplastischer Stärke oder thermoplastischen Stärkederivaten und Polyesterurethanen hergestellt sind.

Folien, die mit thermoplastischer Stärke oder Stärkederivaten und Polyesterurethanen hergestellt sind, lassen sich heißsiegeln oder verschweißen. Dazu ist eine Temperatur von etwa 100 bis 250 °C und eine Kontaktzeit von etwa 0,1 bis 5 s ausreichend. Ein zusätzlicher Kleber ist nicht erforderlich. Folien aus thermoplastischer Stärke allein sind dagegen nicht heißsiegelfähig. Die Folie für die erfindungsgemäße Umhüllung ist glatt, ohne dabei speckig zu wirken. In ihrem Aussehen ähnelt sie einer Naturdarmhülle. Fettpartikel zeichnen sich gut ab, denn die Hülle ist vorzugsweise transparent. Auch nach erheblichem Wasserverlust sitzt sie noch glatt und prall auf dem Wurstbrät. Die Hülle läßt sich einfach abschälen, ohne daß sie dabei spontan aufplatzt. Die Weiterreißfestigkeit ist gut. Diese Eigenschaft läßt sich zudem durch Änderung von Art und Anteil der Komponenten in dem thermoplastischen Gemisch, insbesondere durch die Einarbeitung eines Füllstoffs (z. B. native feinkörnige Stärke), nach Wunsch einstellen.

Das Gewichtsverhältnis der Komponenten a) : b) beträgt bevorzugt 20:80 bis 80:20, besonders bevorzugt 40:60 bis 60:40.

Neben den Komponenten a) und b) kann das thermoplastische Gemisch noch weitere nieder- oder hochmolekulare Bestandteile enthalten, die insbesondere als Weichmacher oder Gleitmittel dienen oder die Verträglichkeit der Komponenten miteinander verbessern. Durch derartige Bestandteile kann die Homogenität oder Fließfähigkeit des extrudierbaren thermoplastischen Gemisches gegebenenfalls noch weiter verbessert werden. Als Weichmacher eignen sich besonders Glycerin, Diglycerin, Sorbit, Polyethylenglykol (PEG), Citronensäuretriethylester, Acetyl-citronensäuretriethylester, Glycerintriacetat, Phthalsäureester (speziell Dimethylphthalat, Diethylphthalat und Dibutylphthalat) sowie Sorbit-mono- und diester. Der Anteil an Weichmacher(n) beträgt bis zu 40 Gew.-%, bevorzugt bis zu 25 Gew.-%, jeweils bezogen auf das Gesamtgewicht des thermoplastischen Gemisches. Gleitmittel, die die Homogenität des thermoplastischen Gemisches verbessern, sind insbesondere pflanzliche Fette oder Öle, synthetische Triglyceride, Lecithine, ethoxylierte Fettalkohole, epoxidierte Leinöle oder Wachse. Der Anteil der Gleitmittel beträgt bis zu 12 Gew.-%, bevorzugt 1 bis 6 Gew.-%, besonders bevorzugt 3 bis 6 Gew.-%, jeweils bezogen auf das Gesamtgewicht des Gemisches.

Die Hülle kann zusätzlich noch Füllstoffe enthalten. Als Füllstoffe bieten sich beispielsweise Calciumcarbonat, Talkum, Kaolin oder Anhydrit (= Calciumsulfat) an. Der Anteil an Füllstoffen kann bis zu 12 Gew.-% betragen, bevorzugt liegt er jedoch bei 2 bis 8 Gew.-%, besonders bevorzugt bei 4 bis 8 Gew.-%, jeweils bezogen auf das Gesamtgewicht des thermoplastischen Gemisches.

Für Hüllen mit einer besonders hohen Stabilität gegenüber heißem oder kochendem Wasser hat es sich als günstig erwiesen, dem thermoplastischen Gemisch noch Vernetzungsmittel hinzuzufügen. Geeignete Vernetzungsmittel sind beispielsweise Dicarbonsäuren, Di- oder Triisocyanate (besonders Hexamethylendiisocyanat), Dialdehyde (besonders Glyoxal), Diepoxide, Diimine oder Silane bzw. Siloxane mit Vinylgruppe(n), z. B. Vinyl-trimethyl-silan. Der Vernetzer wird vorzugsweise erst dann zugesetzt, wenn die übrigen Komponenten des Gemisches bereits aufgeschmolzen sind. Der Anteil an Vernetzer(n) beträgt bis zu 20 Gew.-%, vorzugsweise 0,5 bis 10 Gew.-%, besonders bevorzugt 1 bis 5 Gew.-%, jeweils bezogen auf das Gesamtgewicht des thermoplastischen Gemisches.

Bei einer Dehnung von weniger als den genannten 200 % in einer Richtung kann sich die Hülle nicht mehr ausreichend an das Netz anpassen. Die erwünschte Struktur mit den regelmäßig angeordneten Ausbuchtungen bildet sich deshalb nicht mehr. Bei einer Dehnung von mehr als 500 % quillt die Hülle dagegen zu stark aus den Maschen des Netzes. Zur Bestimmung, ob eine schlauchförmige Hülle ausreichend flexibel ist, um in der erwünschten Weise mit einem Netz kombiniert werden zu können, dient auch folgender Test in Anlehnung an DIN 53 443 und DIN 53 373. Dabei wird ein Stück der füllfertigen, d.h. gewässerten Folie über einen Ring mit einem Innendurchmesser von 55 mm gespannt. Senkrecht auf das Zentrum dieser kreisförmigen Fläche drückt dann eine Stahlkugel mit einem Durchmesser von 20 mm. Die Stahlkugel bewegt sich dabei mit einer Geschwindigkeit von 100 mm/min. Gemessen wird mit welcher Kraft die Kugel einwirken muß, um im Zentrum der aufgespannten Folie eine Auslenkung von 20 mm gegenüber dem Rand zu bewirken. Für die Zwecke der vorliegenden Erfindung geeignet ist eine Folie, die bei diesem Test eine Kraft von 50 N oder weniger, bevorzugt 10 bis 30 N, erfordert.

Das ebenfalls schlauchförmige Netz hat, je nach Kaliber der nahtlosen Hülle, allgemein eine Maschenweite von 0,5 bis 10,0 cm, bevorzugt 1,0 bis 8,0 cm, besonders bevorzugt 1,5 bis 5,0 cm. Es besteht aus einem ein- oder mehrfädigen Material, bevorzugt aus Baumwolle, Hanf, Sisal oder anderen natürlichen und abbaubaren Materialien.

Zur Herstellung der Wurstwaren in der Netzhülle gibt es mehrere Möglichkeiten. Besonders in großtechnischem Maßstab hat es sich als günstig erwiesen, zunächst die Hülle auf eine Hülse zu raffen. Solche Raffraupen auf einer Hülse sind bereits zahlreich beschrieben, beispielsweise in der EP-A 126 474. Häufig trägt die Hülse an einem Ende noch eine Vorrichtung zur Befestigung auf dem Stopfhorn einer Brätfüllmaschine. Am anderen Ende der Hülse befindet sich vielfach eine Aufweitvorrichtung, beispielsweise eine Aufweitscheibe, über die die Hülle beim Entraffen gezogen wird. Das Netz befindet sich zweckmäßig ebenfalls in geraffter Form auf einer separaten Hülse, die über die geraffte Hülle paßt und möglichst ebenfalls an dem Stopfhorn befestigt werden kann. Ein Füllrohr mit einem Kalibrierring, über den die geraffte Hülle beim Füllen mit dem Wurstbrät gezogen wird, ist auch in der EP-A 529 553 beschrieben. Als weniger günstig hat es sich dagegen erwiesen, Hülle und Netz auf eine einzige Hülse zu raffe n .

Eine Füllvorrichtung für schlauchförmige Verpackungshüllen mit Netzüberzug ist in der EP-A 0 340 646 beschrieben. Sie umfaßt jedoch eine Außendarmbremse und ist daher für die in der vorliegenden Erfindung verwendeten Hülle mit hoher Elastizität nicht verwendbar.

Für die Herstellung von Wurstwaren in einer Netzhülle in handwerklichem Maßstab können auch an einem Ende abgebundene oder mit einem Clip verschlossene, nicht geraffte Abschnitte in passender Länge verwendet werden. Das Netz befindet sich dann bereits auf der Hülle und wird beispielsweise durch den Endclip in Position gehalten.

Anstelle von Wurstbrät kann naturgemäß auch ein anderes, nicht pastöses Füllgut verwendet werden, das ausreichend anpassungsfähig ist. Dazu gehören z. B. Fleischstücke für rohen Schinken, die in dieser Umhüllung geräuchert werden können.

Die Herstellung von thermoplastisch verarbeitbarer Stärke ist bekannt und in den WO 90/05161 und 90/10019 beschrieben. Bei der Plastifizierung wird die Helixstruktur der nativen Stärke aufgehoben. Die Stärke liegt danach in amorphem Zustand vor. Die Plastifizierung erfolgt allgemein durch Erhitzen und Zuführen mechanischer Energie, beispielsweise durch längere thermische Behandlung in einem Kneter oder einem Ein- bzw. Zweischneckenextruder. Damit die Stärke unterhalb ihrer Zersetzungstemperatur schmilzt, sind Zusätze notwendig, wie Wasser, 1,3-Butandiol, Glycerin, Diglycerin, N,N-Dimethylharnstoff, Sorbit oder Citrat. Beim Plastifizieren mit Wasser werden etwa 20 bis 25 Gew.-% Wasser, vorzugsweise etwa 17 Gew,-% Wasser hinzugefügt, jeweils bezogen auf das Gewicht der nativen Stärke. Dabei wird eine Temperatur von etwa 100 bis 130 °C eingehalten. Beim Plastifizieren mit Glycerin haben sich ein Anteil von 0,5 bis 20 Gew.-%, vorzugsweise 8 bis 16 Gew.-%, wiederum jeweils bezogen auf das Gewicht der nativen Stärke, und eine Temperatur von 150 bis 170 °C als günstig erwiesen. Durch diese Behandlung wird der Anteil der kristallinen Stärke auf 5 Gew.-% oder noch darunter gesenkt.

Das thermoplastische Gemisch läßt sich in üblichen Apparaturen, beispielsweise in einem Zweischneckenkneter, aus den genannten Komponenten herstellen. Zur Bildung einer homogenen, thermoplastischen Schmelze aus dem Gemisch hat sich eine Temperatur von 90 bis 200 °C, bevorzugt von 120 bis 180 °C, als günstig erwiesen. Die Schmelze kann extrudiert, nach dem Abkühlen zerkleinert und als Granulat oder in ähnlicher Form zwischengelagert, ebenso gut auch direkt zu einer Nahrungsmittelhülle verarbeitet werden. Der aus der beschriebenen Schmelze hergestellte Schlauch wird dann im Blasformverfahren mit Luft aufgeblasen und dabei längs und quer verstreckt in einem Flächenverhältnis von 1:2 bis 1:10, bevorzugt 1:3 bis 1:5. Erst durch die Verstreckung erhalten die Schläuche die optimale Festigkeit, Dehnung, Kaliberhaltung und Schrumpf. Wie stark ausgeprägt jede dieser Eigenschaften ist, hängt primär von der Zusammensetzung des thermoplastischen Gemisches ab.

So lassen sich die Nahrungsmittelhüllen durch gezielte Auswahl der Komponenten des thermoplastischen Gemisches, der Verstreckungsbedingungen und der Art der Nachbehandlung den unterschiedlichsten Anforderungen anpassen. Gegebenenfalls können die blasverformten Hüllen auch noch teilweise thermofixiert werden.

In einem weiteren Verfahrensschritt können die schlauchförmigen Hüllen innen und/oder außen präpariert werden, um sie für die verschiedenen Verwendungen als Wursthülle noch besser geeignet zu machen. Dafür lassen sich die meisten der flüssigen Präparationen, die auch für die Veredelung von Cellulosehydrathüllen üblich sind, in entsprechend angepaßter Konzentration einsetzen. So ist es besonders günstig, die innere Oberfläche einer für Dauerwurst vorgesehenen Hülle mit Eiweiß (bevorzugt Casein, Gelatine, Sojaprotein oder Weizenprotein) zu überziehen. Das Eiweiß wird dabei üblicherweise mit einem Aldehyd an die Oberfläche der Hülle gebunden. Durch den Einsatz von Harzen oder durch den Zusatz von Trennmitteln kann die Schälbarkeit der Wursthülle eingestellt werden. Als Trennmittel sind insbesondere Chromfettsäure-Komplexe, Lecithin oder Diketene mit langkettigen Alkylresten zu nennen. Die Haftung der Hülle am Wurstbrät läßt sich mit bekannten Rezepturen bis zu einer starken Trennwirkung reduzieren.

Geeignete Außenpräparationen sind ebenfalls bereits von Cellulosehüllen bekannt. Durch Behandeln der äußeren Oberfläche der Hülle mit einer solchen Präparation lassen sich insbesondere Schimmelresistenz, Oberflächenrauhigkeit und Bedruckbarkeit beeinflussen.

Die Hülle läßt sich nach einfachen und umweltfreundlichen Verfahren herstellen. Ihre guten Quell- und Schrumpfeigenschaften sowie ihre Affinität zum Brät bewirken, daß sie jederzeit straff am Wurstbrät anliegt und daß sich auch beim langsamen Abtrocknen keine Falten bilden. Durch die Wahl der Komponenten kann die Permeabilität der Hülle für Wasser, Wasserdampf und Sauerstoff exakt eingestellt werden. Überraschenderweise ist die Hülle sogar durchlässig für Rauch, so daß sie auch für geräucherte Wurstsorten (beispielsweise Salami) gut geeignet ist. Die zur Herstellung der Hülle eingesetzte Stärke gehört darüber hinaus zu den besonders günstigen nachwachsenden Rohstoffen.

In den folgenden Beispielen sind Prozente als Gewichtsprozente zu verstehen, soweit nicht anders angegeben.

### Beispiel :

### Herstellung thermoplastischer Stärke und des Gemisches aus thermoplastischer Stärke und Polyesterurethan

a) 100 kg Maisstärke wurden mit 20 kg Glycerin (99 %ig) und 2 kg epoxidiertem Leinöl in einem gleichlaufenden Zweischneckenextruder mit einer Verfahrenslänge von 32 D thermoplastifiziert. Durch mehrere Entgasungen wurde der Wassergehalt auf unter 1 %, bezogen auf das Gesamtgewicht der eingesetzten Maisstärke, vermindert. Das Temperaturprofil des Extruder betrug 100 °C, 175 °C, 170 °C. Das extrudierte Produkt wurde anschließend in ein Granulat umgewandelt. Beim Lagern des Granulats blieb die Stärke im amorphen und damit thermoplastischen Zustand.
b) 60 kg des unter a) beschriebenen Granulats wurden in einem Zweischneckenextruder aufgeschmolzen, entgast und anschließend mit 60 kg thermoplastischem Polyesterurethan (TPU) vermischt, wobei das TPU über einen Seitenstromextruder zugeführt wurde. Die Estersegmente in dem TPU waren aus Adipinsäure- und Butan-1,4-diol-Einheiten aufgebaut. Nach dem Extrudieren wurde das thermoplastische Gemisch wiederum zu einem Granulat verarbeitet.
c) Das unter b) beschriebene Granulat wurde in einem Einschneckenextruder erneut aufgeschmolzen (Schmelztemperatur 182 °C) und über eine Ringdüse extrudiert. Die Drehzahl der Schnecke des Extruders lag bei 29 UpM. Die Ringdüse hatte einen Durchmesser von 15 mm und einen Spalt von 0,6 mm. Die Extrusion erfolgte mit folgendem Temperaturprofil: 130 °C, 170 °C, 190 °C, 190 °C. Die Austrittsgeschwindigkeit lag bei 1,24 m/min, der Ausstoß 2,5 kg/h. Bei einer Abzugsgeschwindigkeit von 2,7 m/min wurde der so hergestellte nahtlose Schlauch dann blasverformt. Bei der Blasverformung wurde der Schlauch in Längsrichtung um den Faktor 2,2, in Querrichtung um den Faktor 2,9 gestreckt. Die Wanddicke des Schlauches betrug dann noch 88 µm. Die Reißfestigkeit des blasverformten Schlauches betrug in Längsrichtung 19,6 N/mm², in Querrichtung 17,2 N/mm². Die Reißdehnung betrug 446,7 % in Längsrichtung und 453,7 in Querrichtung. Die so hergestellte Schlauchfolie wurde dann abschnittsweise zu sogenannten Raupen gerafft.
   Mit Hilfe des in der EP-A 529 553 beschriebenen Füllrohres wurden die gewässerten Raffraupen mit Rohwurstbrät (Salamibrät) gefüllt. Beim Füllen wurde gleichzeitig ein Baumwollnetz (sechseckige Maschen mit einer Weite von 10 mm) entrafft und über die Wurst gezogen, so daß das Netz die Hülle dicht umschloß. Die Wurst wurde dann portioniert und mit einem Metallclip verschlossen. Die Salami zeigte die erwünschte Oberflächenstruktur, bei der sich die Hülle durch die Maschen vorwölbte.

## Patentansprüche

1. Umhüllung für ein pastöses Füllgut, bestehend aus einer flexiblen Schlauchfolie aus einem thermoplastischen Gemisch, wobei die Folie in einem Flächenverhältnis von 1 : 2 bis 1 :10 blasverformt und von einem Netz umgeben ist, **dadurch gekennzeichnet, daß** das thermoplastische Gemisch a) thermoplastische Stärke und/oder ein thermoplastisches Stärkederivat und b) mindestens ein anderes, durch Polykondensation oder Polyaddition erhältliches Polymer umfaßt, wobei das Polymer ausgewählt ist aus der Gruppe umfassend ein Homo- oder Copolymer mit Hydroxycarbonsäure-Einheiten, ein Polyester-urethan, ein Polyetherurethan, ein Polyester-ether-urethan, ein Polyvinylacetat und ein Polyalkylencarbonat der Formel -[CHR¹-CHR²-O-CO-O-]ₙ , wobei R¹ und R² unabhängig voneinander für ein Wasserstoffatom oder einen (C₁-C₄)Alkylrest stehen und n eine ganze Zahl von 10 bis 5.000 bedeutet, wobei das Gewichtsverhältnis a) : b) im Bereich von 90 : 10 bis 10 : 90 liegt und die Hülle im nichtgewässerten Zustand eine Längs- bzw. Querdehnung von 200 bis 500 % aufweist.

2. Umhüllung gemäß Anspruch 1, **dadurch gekennzeichnet, daß** ein ringförmig aufgespanntes, gewässertes Stück der Folie mit einem Durchmesser von 55 mm im Zentrum eine Auslenkung von 20 mm gegenüber dem Rand zeigt, wenn eine Stahlkugel mit einem Durchmesser von 20 mm senkrecht darauf eine Kraft von 50 N oder weniger ausübt.

3. Umhüllung gemäß Anspruch 1 oder 2, **dadurch gekennzeichnet, daß** das thermoplastische Stärkederivat ein Stärkeester, bevorzugt ein Stärkealkanoat, besonders bevorzugt Stärkeacetat, ist.

4. Umhüllung gemäß Anspruch 1 oder 2, **dadurch gekennzeichnet, daß** das Homo- oder Copolymer mit Hydroxycarbonsäure-Einheiten ein Polylactid, eine Poly(3-hydroxy-propionsäure), eine Poly(3-hydroxy-buttersäure), eine Poly(4-hydroxy-buttersäure) oder ein Polycaprolacton ist

5. Umhüllung gemäß Anspruch 1 oder 2, **dadurch gekennzeichnet, daß** das Gewichtsverhältnis a) : b) im Bereich von 20:80 bis 80:20, bevorzugt im Bereich von 40 : 60 bis 60 : 40, liegt.

6. Umhüllung gemäß Anspruch 1 oder 2, **dadurch gekennzeichnet, daß** das thermoplastische Gemisch mindestens einen Weichmacher, vorzugsweise Glycerin, Diglycerin, Sorbit, Polyethylenglykol, Citronensäuretriethylester, Acetyl-citronensäuretriethytester, Glycerintriacetat, einen Phthalsäureester oder Sorbit-mono- oder -diester, enthält, wobei der Anteil an Weichmacher(n) bis zu 40 Gew.-%, bevorzugt bis zu 25 Gew.-%, jeweils bezogen auf das Gesamtgewicht des thermoplastischen Gemisches, beträgt.

7. Umhüllung gemäß Anspruch 1 oder 2, **dadurch gekennzeichnet, daß** das thermoplastische Gemisch mindestens ein Gleitmittel, bevorzugt ein pflanzliches Fett oder ein pflanzliches Öl, ein synthetisches Triglycerid, Lecithin, einen ethoxylierten Fettalkohol, ein epoxidiertes Leinöl oder ein Wachs, enthält, wobei der Anteil an Gleitmittel(n) bis zu 12 Gew.-%, bevorzugt 1 bis 6 Gew.-%, besonders bevorzugt 3 bis 6 Gew.-%, jeweils bezogen auf das Gesamtgewicht des thermoplastischen Gemisches, beträgt.

8. Umhüllung gemäß Anspruch 1 oder 2, **dadurch gekennzeichnet, daß** das thermoplastische Gemisch Füllstoffe, bevorzugt Calciumcarbonat, Talkum, Kaolin oder Anhydrit, enthält, wobei der Anteil an Füllstoffen bis zu 12 Gew.-%, bevorzugt 2 bis 8 Gew.-%, besonders bevorzugt 4 bis 8 Gew.-%, jeweils bezogen auf das Gesamtgewicht des Gemisches, beträgt.

9. Umhüllung gemäß Anspruch 1 oder 2, **dadurch gekennzeichnet, daß** das thermoplastische Gemisch mindestens ein Vernetzungsmittel, bevorzugt eine Dicarbonsäure, ein Di- oder Triisocyanat, ein Dialdehyd, ein Diepoxid, ein Diimin oder ein Silan bzw. Siloxan mit Vinylgruppe(n), enthält, wobei der Anteil an Vernetzer(n) bis zu 20 Gew.-%, bevorzugt 0,5 bis 10 Gew.-%, besonders bevorzugt 1 bis 5 Gew.-%, jeweils bezogen auf das Gesamtgewicht des Gemisches, beträgt.

10. Umhüllung gemäß einem oder mehreren der Ansprüche 1 bis 9, **dadurch gekennzeichnet, daß** die Schälbarkeit vom Wurstbrät durch Trennmittel auf ihrer inneren Oberfläche eingestellt ist, wobei Chromfettsäure-Komplexe, Lecithin sowie Diketene mit langkettigen Alkylresten als Trennmittel bevorzugt sind.

11. Umhüllung Anspruch 1 oder 2, **dadurch gekennzeichnet, daß** das Netz aus einem ein- oder mehrfädigen Material, bevorzugt aus Baumwolle, Hanf, Sisal oder anderen natürlichen und abbaubaren Materialien, besteht.

12. Verwendung der Umhüllung gemäß einem oder mehreren der Ansprüche 1 bis 11 als künstliche Wursthülle, bevorzugt für Rohwurst.

## Claims

1. An envelope for a pasty filling, which envelope consists of a flexible tubular film of a thermoplastic mixture, the film being blow-extruded in an area ratio of 1:2 to 1:10 and encased by a net, wherein the thermoplastic mixture comprises a) thermoplastic starch and/or a thermoplastic starch derivative and b) at least one other polymer obtainable by polycondensation or polyaddition, the polymer being selected from the group comprising a homo- or copolymer containing hydroxycarboxylic acid units, a polyester urethane, a polyether urethane, a polyester ether urethane, a poly(vinyl acetate) and a polyalkylene carbonate of the formula -[CHR¹-CHR²-O-CO-O-]ₙ, where R1 and R2 independently of one another are a hydrogen atom or a (C₁-C₄)alkyl radical and n is an integer from 10 to 5000, the weight ratio a):b) being in the range from 90:10 to 10:90 and the casing, in the unsoaked state, having a longitudinal or transverse elongation of from 200 to 500%.

2. An envelope as claimed in claim 1, wherein a watered piece of the film which is stretched in a ring shape and has a diameter of 55 mm shows in the center a deflection of 20 mm with respect to the edge if a steel ball having a diameter of 20 mm exerts perpendicularly thereto a force of 50 N or less.

3. The envelope as claimed in claim 1 or 2, wherein the thermoplastic starch derivative is a starch ester, preferably a starch alkanoate, particularly preferably starch acetate.

4. The envelope as claimed in claim 1 or 2, wherein the homopolymer or copolymer containing hydroxycarboxylic acid units is a polylactide, a poly(3-hydroxypropionic acid), a poly(3-hydroxybutyric acid), a poly(4-hydroxybutyric acid) or a polycaprolactone.

5. The envelope as claimed in claim 1 or 2, wherein the weight ratio a):b) is in the range from 20:80 to 80:20, preferably in the range from 40:60 to 60:40.

6. The envelope as claimed in claim 1 or 2, wherein the thermoplastic mixture comprises at least one plasticizer, preferably glycerol, diglycerol, sorbitol, poly(ethylene glycol), triethyl citrate, triethyl acetyl citrate, glycerol triacetate, a phthalic ester or sorbitol monoester or diester, the content of plasticizer(s) being up to 40% by weight, preferably up to 25% by weight, in each case based on the total weight of the thermoplastic mixture.

7. The envelope as claimed in claim 1 or 2, wherein the thermoplastic mixture comprises at least one lubricant, preferably a vegetable fat or a vegetable oil, a synthetic triglyceride, lecithin, an ethoxylated fatty alcohol, an epoxidized linseed oil or a wax, the content of lubricant(s) being up to 12% by weight, preferably 1 to 6% by weight, particularly preferably 3 to 6% by weight, in each case based on the total weight of the thermoplastic mixture.

8. The envelope as claimed in claim 1 or 2, wherein the thermoplastic mixture comprises fillers, preferably calcium carbonate, talc, kaolin or anhydrite, the content of fillers being up to 12% by weight, preferably 2 to 8% by weight, particularly preferably 4 to 8% by weight, in each case based on the total weight of the mixture.

9. The envelope as claimed in claim 1 or 2, wherein the thermoplastic mixture comprises at least one crosslinking agent, preferably a dicarboxylic acid, a diisocyanate or triisocyanate, a dialdehyde, a diepoxide, a diimine or a silane or siloxane containing vinyl group(s), the content of crosslinker(s) being up to 20% by weight, preferably 0.5 to 10% by weight, particularly preferably 1 to 5% by weight, in each case based on the total weight of the mixture.

10. The envelope as claimed in one or more of claims 1 to 9, wherein the peelability from the sausagemeat emulsion is set by release agents on its inner surface, preference being given as release agents to chromium-fatty acid complexes, lecithin and diketenes having long-chain alkyl radicals.

11. The envelope as claimed in claim 1 or 2, wherein the net consists of a single or multi-thread material, preferably of cotton, hemp, sisal or other natural and degradable materials.

12. The use of the envelope as claimed in one or more of claims 1 to 11 as artifical sausage casing, preferably for raw sausage.

## Revendications

1. Enveloppe pour une matière de remplissage pâteuse, composée d'un film tubulaire flexible à base d'un mélange thermoplastique, le film étant déformé par soufflage dans un ratio surfacique de 1:2 jusqu'à 1:10 et étant entouré par un filet, **caractérisé en ce que** le mélange thermoplastique contient a) de l'amidon thermoplastique et/ou un dérivé d'amidon thermoplastique et b) au moins un autre polymère susceptible d'être obtenu par polycondensation ou polyaddition, le polymère étant choisi dans le groupe comprenant un homo- ou un copolymère contenant des unités acide hydrocarboxylique, un polyester-uréthane, un polyéther-uréthane, un polyester-éther-uréthane, un polyacétate de vinyle et un polycarbonate d alkylène' de formule - [CHR¹-CHR²-O-CO-O-]ₙ, dans laquelle R₁ et R₂ représentent, indépendamment l'un de l'autre, un atome d'hydrogène ou un radical alkyl en C₁ et C₄, et où n représente un nombre entier de 10 à 5000, le ratio pondéral a):b) étant compris dans la gamme de 90:10 jusqu'à 10:90, et l'enveloppe présentant à l'état non humidifié une élongation longitudinale et/ou transversale de 200 à 500 %.

2. Enveloppe selon la revendication 1, **caractérisée en ce qu'**une portion du film humidifiée d'un diamètre de 55 mm tendu de manière annulaire présente, au centre, une déviation de 20 mm par rapport au bord lorsque une bille en acier d'un diamètre de 20 mm y exerce verticalement une force de 50 N ou moins.

3. Enveloppe selon la revendication 1 ou 2, **caractérisée en ce que** le dérivé d'amidon thermoplastique est un ester d'amidon, de préférence un alcanoate d'amidon, et de façon particulièrement préférée un acétate d'amidon.

4. Enveloppe selon la revendication 1 ou 2, **caractérisée en ce que** l'homo- ou copolymère comportant des unités acide hydrocarboxylique est un polylactide, un acide poly(3-hydroxy-propionique), un acide poly(3-hydroxy-butyrique), un acide poly(4-hydroxy-butyrique) ou une polycaprolactone.

5. Enveloppe selon la revendication 1 ou 2, **caractérisée en ce que** le ratio pondéral a):b) est compris dans la gamme de 20:80 jusqu'à 80:20, de préférence dans la gamme de 40:60 jusqu'à 60:40.

6. Enveloppe selon la revendication 1 ou 2, **caractérisée en ce que** le mélange thermoplastique comprend au moins un plastifiant, de préférence de la glycérine, de la diglycérine, du sorbitol, du polyéthylène glycol, du triéthylester d'acide citrique, de l'acétyl triéthylester d'acide citrique, du triacétate de glycérine, un ester d'acide phtalique, ou un mono- ou diester de sorbitol, la teneur en plastifiant(s) pouvant aller jusqu'à 40 % en poids, de préférence jusqu'à 25 % en poids respectivement par rapport au poids total du mélange thermoplastique.

7. Enveloppe selon la revendication 1 ou 2, **caractérisée en ce que** le mélange thermoplastique comprend au moins un lubrifiant de préférence, une graisse végétale ou une huile végétale, un triglycéride synthétique, de la lécithine, un alcool gras éthoxylé, de l'huile de lin éthoxylée ou une cire, la teneur en lubrifiant(s) pouvant aller jusqu'à 12 % en poids, et étant de préférence de 1 à 6 % en poids, et de façon encore plus préférée de 3 à 6 % en poids, respectivement par rapport au poids total du mélange thermoplastique.

8. Enveloppe selon la revendication 1 ou 2, **caractérisée en ce que** le mélange thermoplastique comprend des matières de charge, de préférence du carbonate de calcium, du talc, du kaolin ou de l'anhydrite, la teneur en matière de charge pouvant aller jusqu'à 12 % en poids, et étant de préférence de 2 à 8 % en poids, et de façon encore plus préférée de 4 à 8 % en poids, respectivement par rapport au poids total du mélange.

9. Enveloppe selon la revendication 1 ou 2, **caractérisée en ce que** le mélange thermoplastique comprend au moins un agent de réticulation, de préférence un acide carboxylique, un di- ou tri-isocyanate, un dialdéhyde, un diepoxide, une diimine ou un silone, notamment un siloxane, comportant des groupes vinyliques, la teneur en agent(s) de réticulation pouvant aller de 20 % en poids, et étant de préférence de 0,5 à 10 % en poids, et de façon encore plus préférée de 1 à 5 % en poids, respectivement par rapport au poids total du mélange.

10. Enveloppe selon l'une au moins des revendications 1 à 9, **caractérisée en ce que** la pelabilité de la chair à saucisse est ajustée par la présence à la surface interne d'agents de séparation, les complexes d'acide gras et de chrome, la lécithine, ainsi que des dicétènes avec des restes alkyliques à longue chaîne étant préférés à titre d'agents de séparation.

11. Enveloppe selon la revendication 1 ou 2, **caractérisée en ce que** le filet est composé d'un matériau à un ou plusieurs fils, de préférence en coton, chanvre, fibre de sisal, ou à base d'autres matériaux naturels et dégradables.

12. Utilisation d'enveloppe selon l'une des revendications 1 à 11, à titre d'enveloppe de saucisse artificielle de préférence pour une saucisse non cuite.
